# EUROPEAN PATENT APPLICATION

(11) **EP 1 750 182 A1**
(43) Date of publication of application: **07.02.2007**
(21) Application number: 06016107.2
(22) Date of filing: 02.08.2006
(51) Int. Cl.: G04C 10/04

(54) **Display device and control method for the same**

(30) Priority: 04.08.2005 JP 2005226773
(71) Applicant: SEIKO EPSON CORPORATION, Shinjuku-ku, Tokyo 163-0811 (JP)
(72) Inventor: Ishii, Junichiro, Suwa-shi Nagano-ken 392-0811 (JP)
(74) Representative: HOFFMANN EITLE

(57) **Abstract**

A display device has a power supply for supplying operating power, a display unit that is driven by power from the power supply for displaying image information and has an image retention characteristic for retaining displayed content, a remaining capacity estimating unit for estimating the remaining capacity of the power supply, and a control unit for controlling display of the image information to an undisplayed state when the estimated remaining capacity of the power supply drops below a predetermined threshold level.

## Description

### BACKGROUND OF THE INVENTION

### 1. Field of technology

The present invention relates to technology for displaying the time, for example, on a display unit having an image retention characteristic.

### 2. Description of Related Art

Japanese Unexamined Patent Appl. Pub. H1-86116 and Japanese Unexamined Patent Appl. Pub. 2005-84343 teach timepieces, for example, comprising an electrophoretic display panel that operates using electrophoresis, a phenomenon whereby charged particles dispersed in a fluid migrate when an electric field is applied. Electrophoretic display panels have an image retention characteristic that causes the display content to remain displayed even when power is not supplied. The display panel can therefore continue to display the time even when the display is not driven.

However, when battery capacity is low and the displayed time cannot be updated, these timepieces continue to display the time shown on the display due to the image retention characteristic of the display panel, and therefore continue to display the wrong time.

### SUMMARY OF THE INVENTION

An object of the present invention is therefore to provide a display device and a display device control method that can avoid displaying the wrong time, for example, due to an insufficient power supply such as low battery capacity.

To achieve this object, a display device according to a preferred aspect of the invention has a power supply for supplying operating power; a display unit that is driven by power from the power supply for displaying image information and has an image retention characteristic for retaining displayed content; a remaining capacity estimating unit for estimating the remaining capacity of the power supply; and a control unit for controlling display of the image information to an undisplayed state when the estimated remaining capacity of the power supply drops below a predetermined threshold level. By thus stopping display of the image information when the estimated remaining power supply capacity drops below a predetermined threshold level, displaying the image information can be turned off before the remaining power supply capacity drops too low to redraw the display, and displaying the wrong information can therefore be avoided.

Preferably, the control unit controls display of the image information to an undisplayed state when the estimated remaining capacity of the power supply is below the predetermined threshold level for a predetermined time. This arrangement avoids controlling the image information to the undisplayed state when the remaining power supply capacity drops temporarily as a result of driving the buzzer, for example, and enables controlling the image information to the undisplayed state only when the actual remaining capacity of the power supply drops below the threshold level.

Further preferably, the control unit causes displaying information related to the power supply when the image information is controlled to the undisplayed state. This arrangement enables reporting information about the power supply to the user when the remaining power supply capacity drops.

Further preferably, the display device also has a timekeeping unit for keeping time, and a display drive unit for displaying time information kept by the timekeeping unit on the display unit, and the control unit controls the time information to an undisplayed state when the estimated remaining capacity of the power supply drops below the predetermined threshold level. By stopping display of the time information when the estimated remaining capacity of the power supply drops below a predetermined threshold level, displaying the time information can be turned off before the remaining power supply capacity drops too low to redraw the display, and displaying the wrong time information can therefore be avoided.

Further preferably, the control unit continues the timekeeping operation of the timekeeping unit while the time information is not displayed, and causes the display drive unit to display the time information based on the timekeeping operation when the estimated remaining capacity of the power supply rises above a predetermined threshold level. This enables displaying the correct time information when the remaining power supply capacity rises.

Further preferably, the time information includes a plurality of time values having different update intervals; and the control unit stops displaying the displayed time information successively from the time value with the shortest update interval as the estimated remaining capacity of the power supply drops, and changes the redraw interval of the display unit to the update interval of the displayed time value having the shortest update interval. This arrangement enables reducing power consumption while displaying the correct time information.

Yet further preferably, the display unit is an electrophoretic display panel.

Yet further preferably, the display device is rendered as a timepiece having a timekeeping unit for keeping time and displaying time information kept by the timekeeping unit.

When rendered as a timepiece, the image retention characteristic of the display unit can be used to suppress power consumption and assure sufficient battery life even when a small battery with low capacity is used, and a timepiece that reliably prevents displaying the wrong time information when the battery is depleted can be provided.

Another aspect of the invention is a control method for a display device comprising a power supply for supplying operating power, and a display unit that is driven by power from the power supply and has an image retention characteristic for retaining displayed content, the display device displaying image information on the display unit, and the control method having steps of: estimating the remaining capacity of the power supply; and controlling display of the image information to an undisplayed state when the estimated remaining capacity of the power supply drops below a predetermined threshold level. By thus stopping display of the image information when the estimated remaining power supply capacity drops below a predetermined threshold level, displaying the image information can be turned off before the remaining power supply capacity drops too low to redraw the display, and displaying the wrong information can therefore be avoided.

Preferably, display of the image information is controlled to an undisplayed state when the estimated remaining capacity of the power supply is below the predetermined threshold level for a predetermined time. This arrangement avoids controlling the image information to the undisplayed state when the remaining power supply capacity drops temporarily as a result of driving the buzzer, for example.

Further preferably, information related to the power supply is displayed when the image information is controlled to the undisplayed state. This arrangement enables reporting information about the power supply to the user when the remaining power supply capacity drops.

Further preferably, the kept time information is displayed on the display unit when the estimated remaining capacity of the power supply is above the threshold level, and the time information is controlled to an undisplayed state when the estimated remaining capacity of the power supply drops below the threshold level. By stopping display of the time information when the estimated remaining capacity of the power supply drops below a predetermined threshold level, displaying the time information can be turned off before the remaining power supply capacity drops too low to redraw the display, and displaying the wrong time information can therefore be avoided.

Yet further preferably, the timekeeping operation continues while the time information is not displayed, and when the estimated remaining capacity of the power supply rises above a predetermined threshold level, time information based on the timekeeping operation is displayed. This enables displaying the correct time information when the remaining power supply capacity rises.

Yet further preferably, the time information includes a plurality of time values having different update intervals; and as the estimated remaining capacity of the power supply drops, displaying the displayed time information is stopped successively from the time value with the shortest update interval, and the redraw interval of the display unit is changed to the update interval of the displayed time value having the shortest update interval. This arrangement enables reducing power consumption while displaying the correct time information.

Other objects and attainments together with a fuller understanding of the invention will become apparent and appreciated by referring to the following description and claims taken in conjunction with the accompanying drawings.

### BRIEF DESCRIPTION OF THE DRAWINGS

FIG. 1 is a plan view of a wristwatch according to a preferred embodiment of the invention.
FIG. 2 is a schematic section view of the time display unit in the wristwatch.
FIG. 3 is a section view showing the arrangement of the display panel.
FIG. 4 is a block diagram showing the electrical arrangement of the time display unit.
FIG. 5 is a flow chart describing the operation of the time display unit.

### DESCRIPTION OF THE PREFERRED EMBODIMENTS

A preferred embodiment of the present invention is described below with reference to the accompanying figures.

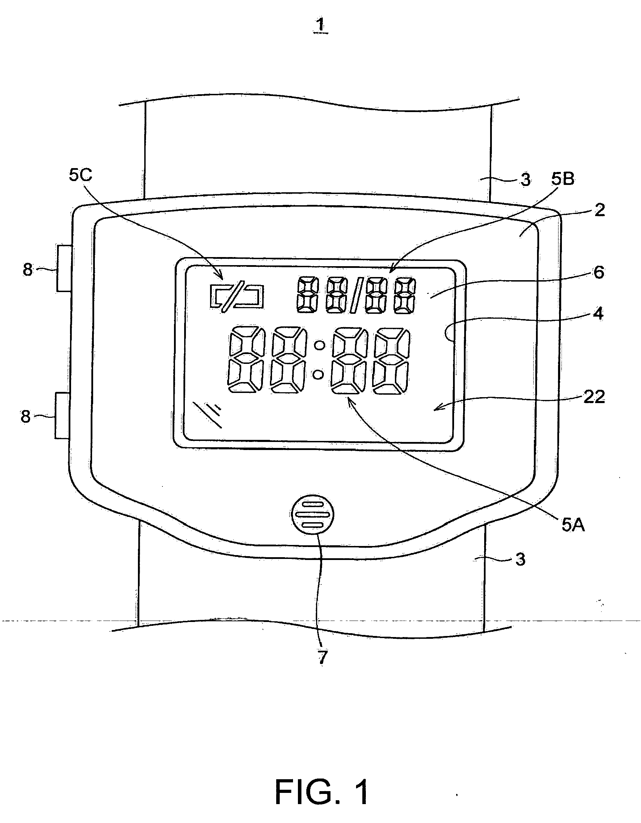

FIG. 1 shows the appearance of a wristwatch 1 according to this embodiment of the invention. As shown in the figure, the wristwatch 1 has a watch case 2, and a wrist band 3 that is attached to the watch case 2 and used to hold the wristwatch 1 on the user's wrist. A time display window 4 for displaying the time is formed in the front of the watch case 2 so that the display panel 5 that displays the time, for example, can be seen through the time display window 4. A crystal 6 made from transparent plastic or transparent glass, for example, is fit into the time display window 4, and the display panel 5 is protected by this crystal 6. A buzzer 7 is also built into this watch case 2, and operating buttons 8 for setting the time and performing other operations are also disposed to the watch case 2.

The display panel 5 has a time display segment unit 5A for displaying the hour and minute of the time (four digits and a colon), a date display segment unit 5B for displaying the month and day (four digits and a slash), and a segment unit 5C for displaying an indicator indicating that the battery capacity is low, and functions as a display unit for displaying information graphically.

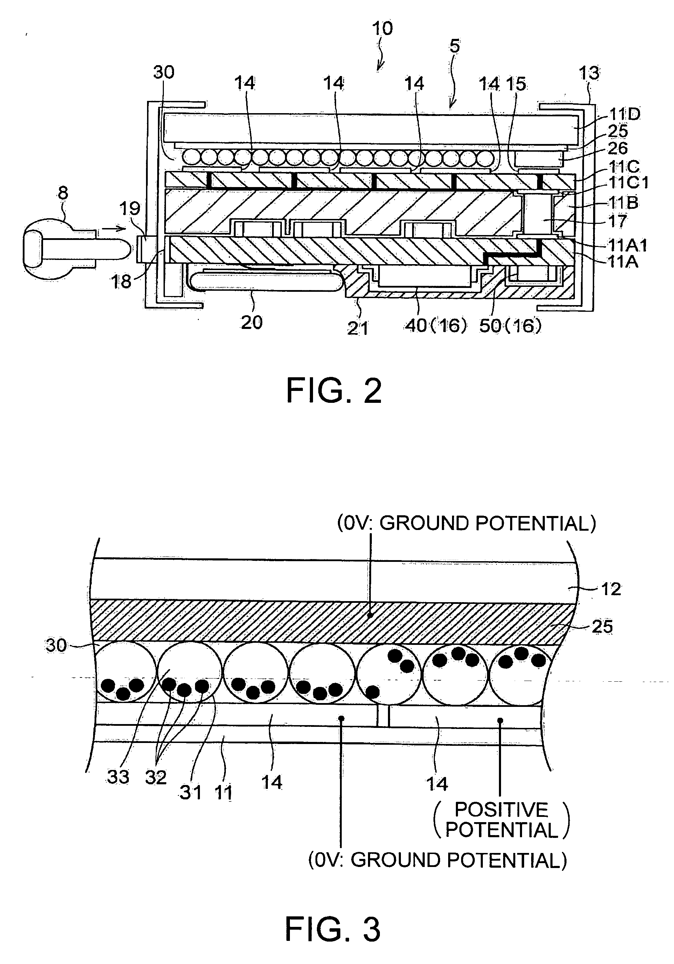

A time display unit 10 rendered in unison with the display panel 5 is disposed inside the watch case 2. As shown in the section view in FIG. 2, this time display unit 10 comprises a circuit board 11A, a display frame 11B, a display substrate 11C, a transparent substrate 11D, and a circuit retainer 13 for holding these other parts.

Segment electrodes 14 for each segment of the segment units 5A to 5C, and a segment electrode 15 for a common electrode, are disposed on top of the display substrate 11C.

The circuit board 11A is on the bottom of the display substrate 11C with the display frame 11B therebetween, and devices 16 rendering the display drive circuit 40 and control unit 50, for example, are mounted on the circuit board 11A. A node 11A1 wired to device 16 (display drive circuit 40) is disposed on top of the circuit board 11A, a node 11C1 wired to the electrodes 14 and 15 is disposed on the bottom of the display substrate 11C, and these nodes 11A1 and 11C1 are electrically connected by a connector 17 passing through the display frame 11B.

A switch electrode 18 is disposed on the side of the circuit board 11A so that conductivity can be established by means of a flat spring 19 disposed to the circuit retainer 13. When the flat spring 19 is deformed as a result of depressing an operating button 8, conductivity is established through the flat spring 19 and the switch closes. Another device 16 (control unit 50 in this embodiment) detects whether the switch is closed or open.

A battery 20 (power supply) for supplying drive power to the devices 16 is removably installed on the bottom of the circuit board 11A. A circuit housing 21 covering the devices 16 is affixed to the circuit board 11A, and the devices 16 are thus protected by the circuit housing 21. A button battery, that is, a primary cell, is used for the battery 20.

A transparent common electrode 25 formed by ITO (indium tin oxide) vapor deposition, for example, is rendered on the display substrate 11C side of the transparent substrate 11D. An electrophoretic layer 30 is disposed between this transparent common electrode 25 and the segment electrodes 14 of the display substrate 11C, and a common electrode conductor 26 is disposed between the transparent common electrode 25 and the common segment electrode 15. This common electrode conductor 26 is made of a conductive rubber, for example, so that the conductive rubber is deformed according to the gap between the common electrode 25 and the common segment electrode 15 to assure a reliable connection between these electrodes 25 and 15.

As shown in FIG. 3, the electrophoretic layer 30 comprises a multitude of microcapsules 31, and the microcapsules 31 are filled with an electrophoretic dispersion fluid 33 containing electrophoretic particles 32. The electrophoretic particles 32 are, for example, positively charged blue particles and the electrophoretic dispersion fluid 33 is colored white, rendering a so-called one-particle electrophoretic layer.

When the display drive circuit 40 holds the common segment electrode 15 (FIG. 2) at 0 V (ground potential) and supplies a positive drive voltage causing a particular segment electrode 14 to go to a positive potential, an electric field is created from the segment electrode 14 to the common electrode 25. This field causes the positively charged electrophoretic particles 32 (blue particle) inside the microcapsules 31 to move to the common electrode 25 side, and causes the white electrophoretic dispersion fluid 33 to move to the segment electrode 14 side. The microcapsules 31 visible from the transparent substrate 11D side appear blue, and the segment therefore displays blue.

Conversely, when the display drive circuit 40 supplies a positive drive voltage to the common segment electrode 15 so that the common electrode 25 is positively charged and holds a particular segment electrode 14 at 0 V, the positively charged electrophoretic particles 32 (blue particle) move to the segment electrode 14 side, and the white electrophoretic dispersion fluid 33 therefore moves to the common electrode 25 side. The microcapsules 31 visible from the transparent substrate 11D side therefore display white, and the segment displays white.

If a potential difference is not created between the common electrode 25 and segment electrode 14, the electrophoretic particles (blue particles) 32 do not move, the display color of the segment therefore does not change, and the previous display state is retained.

In this embodiment of the invention the display drive circuit 40 has an internal booster circuit to boost the voltage (such as 3 V) supplied from the power supply 20 to produce a +12 V voltage, and supplies this +12 V voltage or 0 V as the drive voltage to the segment electrodes 14 and common electrode 25.

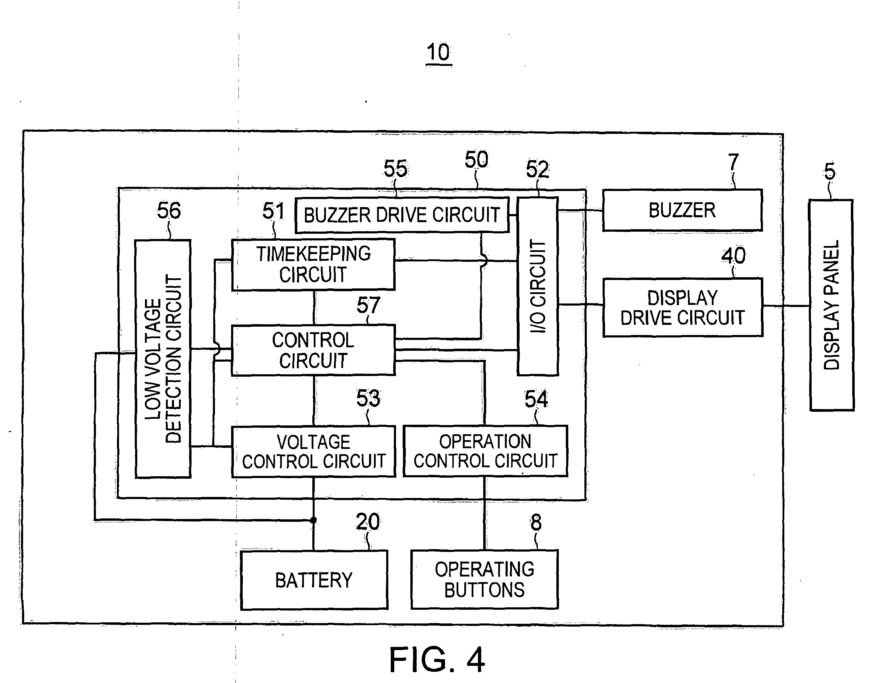

FIG. 4 shows the electrical arrangement of the time display unit 10.

A control unit 50 is connected to the display drive circuit 40 and the battery 20 through an intervening wiring pattern rendered on the circuit board 11A, and comprises a timekeeping circuit 51, input/output (I/O) circuit 52, voltage control circuit 53, operation control circuit 54, buzzer drive circuit 55, low voltage detection circuit 56, and control circuit (control unit) 57.

The timekeeping circuit 51 functions as a timekeeping unit for keeping the date and time (hour and minute) by counting oscillation pulses from an oscillation circuit not shown. The timekeeping circuit 51 is connected to the display drive circuit 40 through the I/O circuit 52.

The voltage control circuit 53 supplies power from the battery 20 to the internal parts of the control unit 50 and the display drive circuit 40. The operation control circuit 54 detects operation of the operating buttons 8 by detecting whether the switch electrode 18 is conductive or nonconductive, and reports the result to the control circuit 57. The buzzer drive circuit 55 is controlled by the control circuit 57 to drive the buzzer 7 and output sound.

The low voltage detection circuit 56 functions as a battery capacity estimation unit that detects the voltage of the battery 20 and estimates the remaining capacity of the battery 20. More particularly, when the battery 20 is a 3-V battery, the low voltage detection circuit 56 determines if the battery 20 voltage is greater than or equal to a first threshold level L1 (such as 2.8 V) that is set to a value greater than the lower limit of the voltage range enabling the display drive circuit 40 to redraw the display, or is greater than or equal to a second threshold level L2 (such as 2.7 V) that is set approximately equal to the lower limit of this voltage range, and reports the result to the control circuit 57.

The control circuit 57 centrally controls overall operation of the time display unit 10, and comprises a CPU, ROM, and RAM, for example. The CPU runs a control program stored in ROM to control operation of the parts of the control unit 50, and outputs commands to the display drive circuit 40 through the I/O circuit 52. These commands include, for example, instructions indicating the display object (date, time, or battery capacity indicator), and the redraw interval.

As described above, the display drive circuit 40 is a circuit for driving the display panel 5 and is controlled by the control circuit 57 to get time information including the date and time kept by the timekeeping circuit 51, and execute a redraw process at the specified redraw interval to display the time information and indicator on the display panel 5.

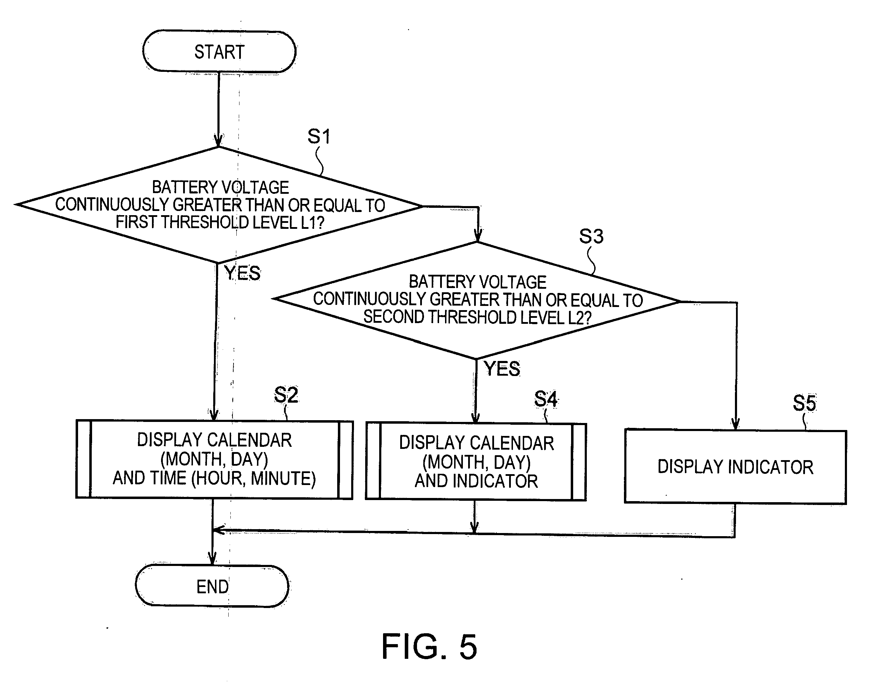

Based on the result returned by the low voltage detection circuit 56, the control circuit 57 runs a display updating process to change the display at a predetermined interrupt period. This display updating process is described below with reference to the flow chart shown in FIG. 5. Note that the time display drive circuit 40 initially displays both the date and time on the display panel 5, and executes the redraw process for the date and time on the display panel 5 at the minute update timing.

In this display updating process the control circuit 57 first determines by means of the low voltage detection circuit 56 if the battery 20 voltage is continuously greater than or equal to the first threshold level L1 (step S1). In this case, the control circuit 57 determines if this determination is held for a predetermined time and proceeds to the next step (S2 or S3) only if this determination continues for the predetermined time. If this determination does not continue for the predetermined time, step S1 repeats at a predetermined period. This invalidates voltage level determinations resulting from a transient drop in the battery voltage when the buzzer 7 is driven and the battery voltage drops temporarily, for example, and thus enables getting an accurate determination based on the normal voltage of the battery 20.

If the battery voltage is greater than or equal to first threshold level L1 (step S1 returns Yes), the control circuit 57 causes the display drive circuit 40 to display the date and time on the display panel 5 (step S2). As a result, a first display state in which both the date and time are displayed is held when there is sufficient remaining battery capacity. In this display state the display drive circuit 40 runs the display panel 5 redraw process at the minute update timing, and thus updates the displayed time at a timing suitable for updating the time.

If the battery voltage is less than the first threshold level L1 (step S1 returns No), the control circuit 57 determines by means of the low voltage detection circuit 56 if the battery 20 voltage is greater than or equal to the second threshold level L2 (step S3). As in step S1, the control circuit 57 determines if this determination is held for a predetermined time and proceeds to the next step only if this determination continues for the predetermined time. If this determination does not continue for the predetermined time, step S3 repeats at a predetermined period. Alternatively, operation could return to step S1 if this determination is not held continuously. This assures that the normal voltage of the battery 20 is compared with the second threshold level L2.

If the battery voltage is greater than or equal to second threshold level L2 (step S3 returns Yes), the control circuit 57 causes the display drive circuit 40 to display the date and the battery capacity indicator on the display panel 5 (step S4). In this second display state the display drive circuit 40 runs the display panel 5 redraw process at the interval for updating the date, and the displayed date is therefore updated at a timing suitable for updating the date (such as at 12:00 midnight). That is, the display panel 5 redraw process is executed at the update interval of the time information (day) with the shortest update interval in the displayed time information (month and day). As a result, the number of times the display panel 5 is redrawn in a specific unit of time can be greatly reduced, and power consumption can therefore be reduced, compared with the first display state for displaying the hour and minute.

Furthermore, displaying an indicator (see FIG. 1) that indicates a drop in battery capacity informs the user that the remaining battery capacity is low, while displaying only the date also informs the user that the timepiece 1 is not broken.

If the battery capacity is less than the second threshold level L2 (step S3 returns No), that is, the battery 20 is almost depleted, the control circuit 57 causes the display drive circuit 40 to display only the low battery capacity indicator on the display panel 5. In this third display state the display panel 5 is redrawn only once, and the image retention characteristic of the display panel 5 causes the indicator to remain displayed. The redraw process is therefore executed only once, and power consumption is even lower than in the second display state. Thus displaying the battery indicator even when the battery is depleted prompts the user to replace the battery and also informs the user that the timepiece 1 is not broken.

When the battery 20 capacity drops, this embodiment of the invention applies control to stop displaying time information (the date and time) so that even if the time information is displayed on a display panel 5 having an image retention characteristic, the time information can be cleared from the display before redrawing the display is disabled due to insufficient battery 20 capacity. As a result, situations in which the display is left displaying the wrong date and time can be reliably avoided.

Furthermore, as the battery 20 capacity drops, the displayed information is successively turned off in order from the time information with the shortest update interval, and the update interval of the display panel 5 is changed to the update interval of the time information having the shortest update interval of the time information that is being displayed. Power consumption can therefore be reduced while displaying accurate time information, and the drive time can therefore be increased. As a result, a timepiece that can use the image retention characteristic of the display panel 5 to reduce power consumption and assure sufficient battery life even when using a small battery with low capacity, and can reliably avoid displaying the wrong time information when the battery is depleted, can be provided, and the size of the timepiece can also be easily reduced.

It will be obvious to one with ordinary skill in the related art that this embodiment of the invention is just one example of the present invention, and the invention can be varied in many ways without departing from the scope of the accompanying claims. For example, a primary battery is used for the display panel 5 in this embodiment of the invention, but a secondary battery can be used instead. Furthermore, if a secondary battery is used, a power generator for solar power generation or thermal power generation can be provided, and the power produced by this generator can be used to charge the secondary battery.

When the battery can thus be recharged and the remaining battery capacity of the secondary battery increases due to recharging, the display updating process of the invention can be executed to change the display from the third display state to the second display state and to the first display state as the battery voltage increases, and the time information that is displayed and not displayed can be varied according to the remaining capacity of the secondary battery. Furthermore, because the timekeeping circuit 51 continues to keep time, the correct time and date can be displayed based on this timekeeping operation when the time and date are changed from the undisplayed state to the displayed state.

This embodiment of the invention is described as a wristwatch 1 that can display the month, day, hour and minute, but the invention is not so limited and could also display the year and second, or the calendar information could be omitted and only the time displayed. If only the time can be displayed, whether the power supply voltage is greater than or equal to the first threshold level L1, for example, is determined, and the time is displayed if the voltage is greater than or equal to the first threshold level L1. If the voltage is less than the first threshold level L1, the time is not displayed and only the indicator is displayed.
The indicator is also not limited to a graphic element, and could be text or other information relating to the power supply.

A one-particle electrophoretic display panel is used as the display panel 5 having an image retention characteristic in this embodiment of the invention, but the invention is not so limited. For example, a two-particle electrophoretic display panel, a twisted ball display panel, an electrochromic display panel, a ferroelectric LCD, or other type of display panel with an image retention characteristic can be used. The display method is also not limited to a segment display, and a dot matrix display could be used instead.

This embodiment of the invention is described using a wristwatch by way of example, but the invention is not so limited and can be applied to a wide range of electronic devices (display devices) that can use a display panel with an image retention characteristic. For example, the invention can be used with a mantle clock, a wall clock or grandmother clock, a pocket watch, or other type of timepiece, personal digital assistants (PDA), cell phones, printers, scanners, and notebook computers. When rendered as a portable device such as a timepiece, the invention is also not limited to wristwatches, and can be adapted to various other shapes, including necklaces, rings, and pendants.

### TEXT IN THE FIGURES

FIG. 3
   0 V: ground potential
   positive potential
FIG. 4 display panel 5 buzzer 7 operating buttons 8
   display drive circuit 40
   I/O circuit 52
   buzzer drive circuit 55
   operation control circuit 54
   timekeeping circuit 51
   control circuit 57
   voltage control circuit 53
   battery 20
   low voltage detection circuit 56
FIG. 5
   START
   S1 Battery voltage continuously greater than or equal to first threshold level L1?
   S2 Display calendar (month, day) and time (hour, minute)
   S3 Battery voltage continuously greater than or equal to second threshold level L2?
   S4 Display calendar (month, day) and indicator
   S5 Display indicator
   END

## Claims

1. A display device comprising:
a power supply for supplying operating power;
a display unit that is driven by power from the power supply for displaying image information and has an image retention characteristic for retaining displayed content;
a remaining capacity estimating unit for estimating the remaining capacity of the power supply; and
a control unit for controlling display of the image information to an undisplayed state when the estimated remaining capacity of the power supply drops below a predetermined threshold level.

2. The display device described in claim 1, wherein the control unit controls display of the image information to an undisplayed state when the estimated remaining capacity of the power supply is below the predetermined threshold level for a predetermined time.

3. The display device described in claim 1, wherein the control unit causes displaying information related to the power supply when the image information is controlled to the undisplayed state.

4. The display device described in claim 1, further comprising:
a timekeeping unit for keeping time; and
a display drive unit for displaying time information kept by the timekeeping unit on the display unit;
wherein the control unit controls the time information to an undisplayed state when the estimated remaining capacity of the power supply drops below the predetermined threshold level.

5. The display device described in claim 4, wherein the control unit continues the timekeeping operation of the timekeeping unit while the time information is not displayed, and causes the display drive unit to display the time information based on the timekeeping operation when the estimated remaining capacity of the power supply rises above a predetermined threshold level.

6. The display device described in claim 4, wherein the time information includes a plurality of time values having different update intervals; and
the control unit stops displaying the displayed time information successively from the time value with the shortest update interval as the estimated remaining capacity of the power supply drops, and changes the redraw interval of the display unit to the update interval of the displayed time value having the shortest update interval.

7. The display device described in claim 1, wherein the display unit is an electrophoretic display panel.

8. The display device described in claim 1, wherein the display device is rendered as a timepiece having a timekeeping unit for keeping time and displaying time information kept by the timekeeping unit.

9. A control method for a display device comprising a power supply for supplying operating power, and a display unit that is driven by power from the power supply and has an image retention characteristic for retaining displayed content, the display device displaying image information on the display unit, the control method having steps of:
estimating the remaining capacity of the power supply; and
controlling display of the image information to an undisplayed state when the estimated remaining capacity of the power supply drops below a predetermined threshold level.

10. The display device control method described in claim 9, wherein display of the image information is controlled to an undisplayed state when the estimated remaining capacity of the power supply is below the predetermined threshold level for a predetermined time.

11. The display device control method described in claim 9, wherein information related to the power supply is displayed when the image information is controlled to the undisplayed state.

12. The display device control method described in claim 9, wherein the kept time information is displayed on the display unit when the estimated remaining capacity of the power supply is above the threshold level, and the time information is controlled to an undisplayed state when the estimated remaining capacity of the power supply drops below the threshold level.

13. The display device control method described in claim 12, wherein the timekeeping operation continues while the time information is not displayed, and when the estimated remaining capacity of the power supply rises above a predetermined threshold level, time information based on the timekeeping operation is displayed.

14. The display device control method described in claim 12, wherein the time information includes a plurality of time values having different update intervals; and
as the estimated remaining capacity of the power supply drops, displaying the displayed time information is stopped successively from the time value with the shortest update interval, and the redraw interval of the display unit is changed to the update interval of the displayed time value having the shortest update interval.
